# DEMANDE DE BREVET EUROPEEN

(11) **EP 3 441 750 A1**
(43) Date de publication de la demande: **13.02.2019**
(21) Numéro de dépôt: 18187341.5
(22) Date de dépôt: 03.08.2018
(51) Int. Cl.: G01N 21/71, G01N 21/31, G01N 21/33

(54) **PROCEDE DE MESURE ISOTOPIQUE**

(30) Priorité: 07.08.2017 FR 1757567
(71) Demandeur: Commissariat à l'Energie Atomique et aux Energies Alternatives, 75015 Paris (FR)
(72) Inventeur: SIRVEN, Jean-Baptiste, 75013 Paris (FR)
(74) Mandataire: Fonquernie, Sophie Benedicte

(57) **Abrégé**

L'invention concerne un procédé de mesure de mesure d'un rapport isotopique d'un élément présent dans un matériau comportant une pluralité d'éléments, le procédé comprenant les étapes suivantes :
- une étape d'application d'au moins un faisceau laser sur le matériau de manière à générer un plasma, ledit plasma étant apte à émettre un spectre lumineux comprenant une pluralité de raies spectrales émises par les éléments du matériau ;
- une étape de mesure apte à mesurer le profil d'au moins une raie spectrale d'intérêt émise par l'élément d'intérêt, ladite étape de mesure comprenant au moins une analyse par un spectromètre du spectre lumineux émis par le plasma ;
- une étape de traitement apte à relever sur le profil de la raie spectrale d'intérêt la longueur d'onde optimale correspondant à un point d'équilibre ;
- une étape de détermination du rapport isotopique en fonction de la longueur d'onde optimale relevée.

## Description

### DOMAINE TECHNIQUE DE L'INVENTION

L'invention se situe dans le domaine de la mesure isotopique.

La mesure isotopique est notamment réalisée dans le domaine nucléaire, celui de l'environnement, des géosciences et des sciences du vivant.

L'invention vise particulièrement à mesurer un rapport de concentration entre deux isotopes d'un même élément chimique (que nous appellerons également « élément » par la suite).

### ETAT DE LA TECHNIQUE

La mesure isotopique consiste à déterminer la présence et/ou la concentration dans un échantillon de matériau d'un ou de plusieurs isotopes d'un élément chimique.

Chaque élément du tableau périodique présente un ou plusieurs isotopes, à savoir des atomes différents d'un même élément. Deux isotopes d'un même élément présentent le même nombre de protons et d'électrons mais un nombre de neutrons différent.

Pour les solides, les techniques d'analyse isotopique les plus courantes sont basées sur la spectrométrie de masse capable de fournir une réponse sélective sur une ou plusieurs masses atomiques données correspondant à des isotopes d'éléments donnés, l'intensité de la réponse devant être proportionnelle à l'abondance (la concentration) des isotopes.

Ainsi, les techniques les plus courantes pour les solides sont : spectrométrie de masse après mise en solution de l'échantillon (ICP-MS, TIMS), sur échantillonnage par ablation laser (LA-ICP-MS) ou par couplage à une décharge luminescente (GD-MS). On peut citer également la technique SIMS qui repose sur le bombardement de l'échantillon par un faisceau d'ions, et la technique RIMS qui consiste à vaporiser l'échantillon dans un four avant d'ioniser la vapeur produite par laser.

Outre la préparation de l'échantillon nécessaire pour les deux premières et qui peut être longue, toutes ces techniques ont pour point commun d'être des techniques de laboratoire, nécessitant une instrumentation volumineuse, difficilement miniaturisable et difficile à mettre en oeuvre en dehors du laboratoire, par exemple à l'échelle industrielle. Elles sont cependant capables de fournir des résultats très précis.

Des techniques optiques existent mais elles s'appliquent exclusivement aux gaz et mesurent principalement les molécules composées d'éléments légers (H₂O, CO₂, CH₄...). Elles sont basées principalement sur la spectrométrie d'absorption à base de diode laser hautement sélective et ajustable (Tunable diode laser absorption spectroscopy ou TDLAS), éventuellement par mesure de la vitesse de déclin de l'intensité de la lumière dans une cavité optique (cavity ring down spectroscopy ou CRDS).

On connait également la technique de Spectrométrie d'Emission Optique (en anglais « Optical Emission Spectrometry » ou OES) couplée à un plasma inductif (en anglais « Inductively Coupled Plasma » ou ICP). L'ICP-OES à haute résolution est marginalement utilisée pour l'analyse isotopique car moins performante que l'ICP-MS.

La LIBS (Laser-Induced Breakdown Spectroscopy) peut également être mise en oeuvre pour l'analyse isotopique, notamment des solides.

La LIBS est notamment décrite dans la publication des Techniques de l'Ingénieur p2870 « LIBS : spectrométrie d'émission optique de plasma induit par laser », Daniel L'HERMITE et Jean-Baptiste SIRVEN, publiée le 10/06/2015*.*

Son principe est de focaliser une impulsion laser à la surface d'un échantillon de matériau (ou du matériau) pour générer un plasma transitoire dont on analyse l'émission lumineuse au moyen d'un spectromètre. En collectant l'émission lumineuse du plasma et en analysant le spectre par spectrométrie, il est possible d'identifier les éléments présents dans le plasma, et donc de déterminer la composition du matériau, à partir des bases de données de raies d'émission.

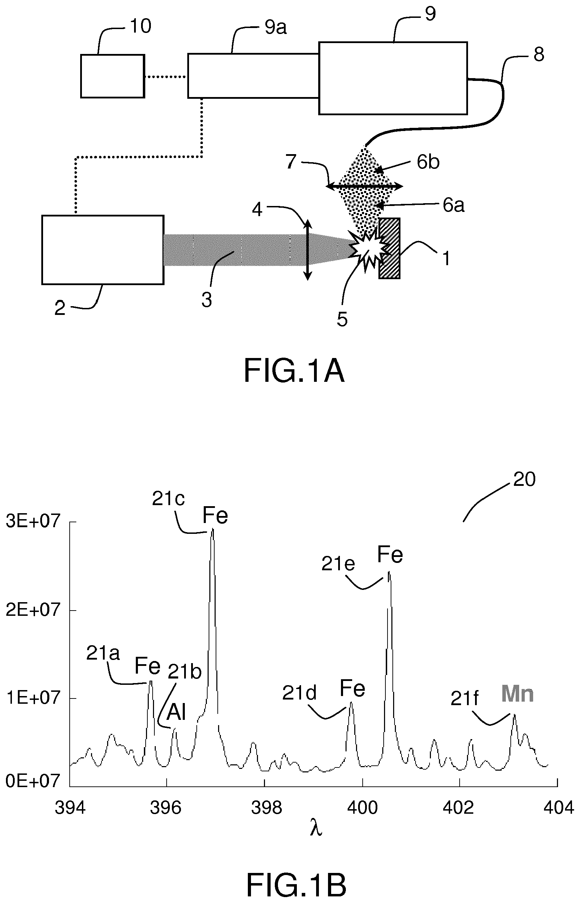

Dans l'exemple de dispositif de la figure 1A, un générateur laser 2 génère un faisceau laser 3 qui est focalisé sur l'échantillon 1 grâce à un premier système optique 4. Cela génère un plasma 5. Le plasma 5 émet une émission lumineuse 6a qui est focalisée par un second système optique 7. L'émission lumineuse focalisée 6b est envoyée à un spectromètre 9 par l'intermédiaire d'une fibre optique 8. Le spectromètre 9 comprend (ou est associé à) un détecteur 9a synchronisé avec le générateur de laser 2. Le spectromètre 9 permet d'enregistrer des spectres de raies. Enfin, des moyens de traitement 10 permettent de traiter les spectres enregistrés.

Le premier et/ou le second système optique peuvent être une lentille.

Comme représenté en figure 1B, la LIBS permet de générer un spectre 20, qui se présente sous la forme d'un ensemble de raies spectrales 21a, 21 b, 21c, 21d, 21e, 21f. Les raies spectrales correspondent aux raies d'émission des éléments composant le matériau, et permettent - à l'aide des données disponibles de corrélation entre les raies d'émission et les éléments - de déterminer la composition élémentaire de l'échantillon de matériau. La longueur d'onde λ d'une raie renseigne sur un élément présent dans le matériau et l'intensité I est reliée à la concentration de cet élément.

La spectrométrie d'émission LIBS s'applique également à l'analyse isotopique car les raies atomiques de différents isotopes d'un même élément sont à des longueurs d'onde légèrement différentes. Ce décalage spectral est dû à des effets de masse (majoritaires pour les éléments légers) et de modification de la distribution de charges à l'intérieur du noyau (majoritaires pour les éléments lourds). Cependant, ce décalage est généralement de l'ordre d'une fraction de nm voire de quelques pm, comme le montre le tableau 1 ci-dessous :

**Tableau 1**

| Isotopes | Raie d'émission | Décalage isotopique |
|---|---|---|
| 7Li → 6Li | 670.775 nm | + 17 pm |
| 10B → 11B | 208.891 nm | - 2.5 pm |
| 238U → 235U | 424.437 nm | + 25 pm |
| 239Pu → 240Pu | 594.522 nm | + 13 pm |

Un tel décalage est difficilement observable dans un plasma généré par LIBS dans des conditions usuelles, car le confinement du plasma par l'air ambiant à pression atmosphérique entraîne une densité élevée, et donc un élargissement des raies d'émission dû à l'effet Stark. Cet élargissement atteint couramment plusieurs dizaines voire centaines de pm et masque par conséquent le décalage isotopique, même si le spectromètre utilisé a une résolution spectrale suffisante pour résoudre ce décalage. La limitation est ici d'ordre physique et non pas instrumental.

Pour surmonter ces inconvénients, plusieurs solutions sont connues.

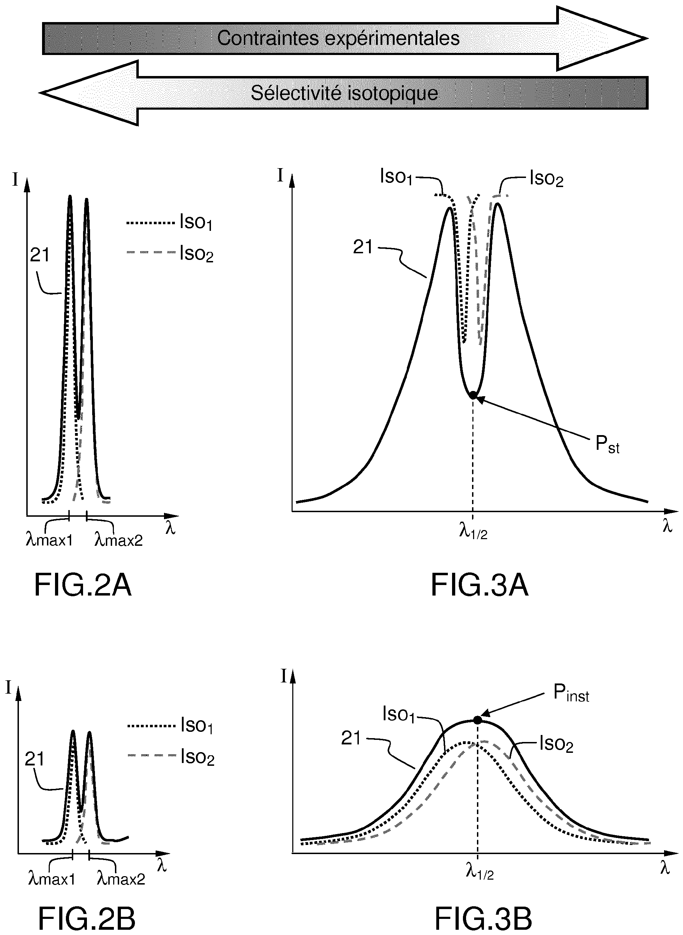

Une première solution consiste à faire l'analyse à pression réduite, voire sous vide. En limitant ainsi le confinement du plasma par le milieu ambiant, on diminue sa densité et l'on peut retrouver une sélectivité spectrale suffisante pour certains isotopes, comme on peut le voir sur les figures 2A et 2B.

Cette approche a été mise en oeuvre pour l'analyse isotopique de l'uranium (W. Pietsch et al., Isotope ratio détermination of uranium by optical emission spectroscopy on a laser-produced plasma - basic investigations and analytical results. Spectrochim. Acta Part B 53 (1998) 751-761*)* et du plutonium (C. A. Smith et al., Pu-239/Pu-240 isotope ratios determined using high resolution emission spectroscopy in a laser-induced plasma. Spectrochimica Acta Part B 57 (2002) 929-937).

Elle n'est pas applicable à tous les isotopes et nécessite un spectromètre de haut pouvoir de résolution, donc volumineux : spectromètre de 2 mètres de focale, pouvoir de résolution d'environ 89000 *(Smith)* ou spectromètre de 1 mètre de focale, pouvoir de résolution d'environ 91000 *(Pietsch).*

Une seconde solution consiste à envoyer un second faisceau laser à travers le plasma, afin de mesurer un signal d'absorption résonante ou de fluorescence.

Cette approche a été testée pour l'analyse isotopique du lithium (B. W. Smith et al., A laser ablation-atomic fluorescence technique for isotopically selective détermination of lithium in solids. Spectrochimica Acta Part B 53 (1998) 1131-1138*)* et de l'uranium (B. W. Smith et al., Measurement of uranium isotope ratios in solid samples using laser ablation and diode laser-excited atomic fluorescence spectrometry. Spectrochimica Acta Part B 54 (1999) 943-958*).*

Dans ces deux solutions, on voit que les dispositifs à mettre en oeuvre sont contraignants pour l'analyse de terrain, qu'il s'agisse de l'utilisation d'une enceinte à basse pression, ou d'un second laser, accordable qui plus est, entraînant des contraintes importantes de robustesse et d'alignement du second faisceau laser dans le plasma. Ces approches sont donc plutôt adaptées à l'analyse en laboratoire, et notamment à l'analyse de traces : en particulier, l'utilisation d'un second faisceau laser permet de détecter sélectivement l'espèce à mesurer, et donc d'accroître considérablement la sensibilité de la mesure.

Une troisième solution consiste en une approche chimiométrique du traitement des spectres, en utilisant par exemple la méthode des moindres carrés partiels (PLS), et qui peut aider à surmonter cette limitation (l'interférence spectrale partielle entre les raies émises par différentes isotopes). Elle met en oeuvre un seul laser, à une pression atmosphérique.

Cette approche a surtout comme inconvénient de nécessiter des échantillons de référence, de rapport isotopique connu au préalable, afin d'étalonner la mesure.

Il est en outre généralement nécessaire de disposer d'un spectromètre à haut pouvoir de résolution, donc entre autres plus coûteux et plus volumineux.

La technique LAMIS (laser ablation molecular isotopic spectrometry) est également une alternative dérivée de la LIBS. Elle exploite le fait que le décalage isotopique des molécules formées par réaction chimique entre l'élément d'intérêt et un autre élément (principalement l'oxygène lorsque l'analyse est faite dans l'air), est plus élevé que le décalage isotopique des raies atomiques.

Le cas typique est celui du Bore, avec un décalage respectivement 2,5 pm et 730 pm pour ¹⁰B/¹¹B (raie atomique à 208,89 nm) et pour ¹⁰BO/¹¹BO (bande moléculaire à 255-256 nm). Cette technique possède donc les mêmes caractéristiques et avantages que la LIBS (mesure directe, rapide, à pression atmosphérique), avec en outre la possibilité d'utiliser un spectromètre de résolution modérée dans les cas les plus favorables.

Une de ces techniques fait notamment l'objet de la demande de brevet WO2012/087405 qui décrit la technique LAMIS, c'est à dire la mesure de spectres moléculaires plutôt que de spectres atomiques : le procédé comprend l'application d'un faisceau laser à l'échantillon dans l'air ambiant sous pression ambiante, générant ainsi la phase gazeuse de l'échantillon puis la mesure d'au moins un spectre moléculaire d'une espèce moléculaire isotopomère dans la phase gazeuse de l'échantillon.

D'une part, avec la technique LAMIS telle que décrite dans la demande de brevet WO2012/087405 il peut être nécessaire de disposer d'un compartiment dans le dispositif dédié à la réaction chimique et/ou à la mesure isotopique moléculaire après réaction.

Une autre technique LAMIS est décrite dans la publication « Standoff Détection of Uranium and its Isotopes by Femtosecond Filament Laser Ablation Molecular Isotopic Spectrometry » Kyle C. Hartig, Isaac Ghebregziabher & Igor Jovanovic ; Scientific Reports volume 7, Article number 43852 (2017*),* qui décrit une méthode et un dispositif de détection à distance de l'uranium et de ses isotopes par spectrométrie isotopique moléculaire combiné avec un laser d'ablation à filament femtoseconde (fs) et porte ainsi sur la combinaison filament femtoseconde et LAMIS formant une émission moléculaire.

D'autre part, la technique LAMIS est réservée aux éléments remplissant les trois conditions suivantes :
- ils forment une molécule avec un autre élément (du milieu ambiant ou de l'échantillon lui-même) ;
- cette molécule présente un décalage isotopique suffisamment discriminant par rapport à celui des raies atomiques ;
- l'émission de cette molécule est suffisamment intense et dans une bande spectrale accessible par l'instrumentation.

Enfin, pour détecter un signal d'émission moléculaire, il faut attendre un certain temps après le tir laser de sorte que les molécules puissent se former. Pendant ce temps, le plasma se refroidit et son émission diminue. Ainsi, la sensibilité de la technique LAMIS peut être limitée par la nécessité de décaler temporellement la détection du signal.

Les rapports isotopiques mesurés par LAMIS dans la demande de brevet WO2012/087405 sont : B, H, C, Mn, Sr.

L'invention vise à surmonter les inconvénients précités de l'art antérieur.

Plus particulièrement elle vise à disposer d'un procédé de mesure isotopique, plus particulièrement de mesure d'un rapport isotopique, permettant de s'affranchir des contraintes liées à l'utilisation d'une pression réduite, à l'utilisation d'un second laser sondant le plasma, ou à l'utilisation de spectromètres à haut pouvoir de résolution, ou encore à la nécessité de disposer d'échantillons de référence pour étalonner la mesure.

Un des objectifs de l'invention est également d'élargir la portée de la technique LAMIS et de pouvoir analyser tous les éléments, sans avoir besoin de remplir les conditions listées plus haut.

Enfin, un autre objectif de l'invention est également de pouvoir mettre en oeuvre un tel procédé à l'échelle industrielle, et non seulement à l'échelle du laboratoire.

### EXPOSE DE L'INVENTION

Un objet de l'invention permettant d'atteindre ce but est un procédé de mesure d'un rapport isotopique d'un élément d'intérêt présent dans un matériau comportant une pluralité d'éléments.

Le procédé comprend les étapes suivantes :
- une étape d'application d'au moins un faisceau laser sur le matériau de manière à générer un plasma, ledit plasma étant apte à émettre un spectre lumineux comprenant une pluralité de raies spectrales émises par les éléments du matériau ;
- une étape de mesure consécutive à l'étape d'application et apte à mesurer le profil d'au moins une raie spectrale d'intérêt émise par l'élément d'intérêt, ladite étape de mesure comprenant au moins une analyse par un spectromètre du spectre lumineux émis par le plasma ;
- une étape de traitement consécutive à l'étape de mesure et apte à repérer, en fonction du profil de la raie spectrale d'intérêt, la longueur d'onde optimale correspondant soit au point d'équilibre stable correspondant au creux entre deux cloches lorsque le profil présente un profil d'auto-absorption en double cloche, soit au point d'équilibre instable correspondant au sommet du profil en cloche lorsque le profil est une simple cloche ;
- une étape de détermination consécutive à l'étape de traitement et apte à déterminer le rapport isotopique de l'élément d'intérêt en fonction de la longueur d'onde optimale relevée, ladite étape de détermination comprenant soit une étape de comparaison avec une fonction de corrélation entre un rapport isotopique et une longueur d'onde optimale pour un élément donné, soit une étape de mise en oeuvre d'une méthode multivariée.

Dans le cas du point d'équilibre instable correspondant au sommet du profil en simple cloche, il peut s'agir d'un profil d'émission, ou d'un profil d'auto-absorption dite « modérée », ledit profil étant également nommé « profil d'auto-absorption « non renversé ».

De manière préférentielle, l'étape de mesure comprend également un enregistrement du spectre lumineux analysé par le spectromètre.

Selon l'invention, un spectre (aussi nommé « spectre lumineux » dans la présente description) se présente sous la forme d'une courbe fournissant l'intensité I (plus largement l'amplitude) d'un signal en fonction de la longueur d'onde λ, et comprenant une pluralité de raies spectrales. On peut aussi parler de « profil de raies spectrales » dans la présente description pour désigner la forme de chaque raie. Dans la présente description, on pourra parler indifféremment de « raie » ou de « raie spectrale ».

Selon l'invention, chaque raie spectrale présente un profil qui est défini comme une partie de courbe. Le profil d'une raie spectrale présente :
- soit une forme en cloche présentant un seul pic dont la hauteur maximale hₘₐₓ correspond à une intensité maximale Iₘₐₓ et à une longueur d'onde dite maximale λₘₐₓ et présentant une largeur ℓ mesurée à mi-hauteur de la raie (valeur de l'intensité égale à la moitié de l'intensité maximale Iₘₐₓ au centre de la cloche) ;
- soit une forme en double cloche, chaque cloche présentant un pic dont la hauteur maximale hₘₐₓ correspond à une intensité maximale Iₘₐₓ et à une longueur d'onde dite maximale λₘₐₓ et présentant une largeur ℓ mesurée à mi-hauteur de la raie (valeur de l'intensité égale à la moitié de l'intensité maximale Iₘₐₓ au centre de chaque cloche).

Le procédé selon l'invention permet de s'affranchir des contraintes liées à l'utilisation d'une pression réduite ou à celle d'un second laser sondant le plasma.

Il peut également permettre d'éviter l'utilisation d'un spectromètre à haut pouvoir de résolution, ou encore de devoir disposer d'échantillons de référence pour étalonner la mesure.

Il suffit de repérer le profil de la raie et de mesurer, en fonction du profil (en double cloche avec un creux entre les deux cloches, respectivement en cloche), la longueur d'onde correspondant au point d'équilibre stable du creux du profil d'auto-absorption (maximum d'absorption), respectivement à un point d'équilibre instable du profil de la raie (maximum d'émission).

En outre, il élargit la portée de la technique LAMIS dans la mesure où potentiellement tous les éléments peuvent être analysés, sans avoir besoin de remplir les conditions listées plus haut, et il permet potentiellement d'améliorer la sensibilité de la mesure. Ainsi, le procédé selon l'invention permet de mesurer des rapports isotopiques de toutes sortes de matériaux.

Selon un mode de réalisation, le procédé de mesure comprend une étape d'émission d'un faisceau laser par des moyens d'émission, tels qu'un générateur laser, préalablement à l'étape d'application dudit faisceau laser sur le matériau.

Selon un mode de réalisation préférentiel, l'émission dudit faisceau laser est réalisée par impulsions.

Selon un mode de réalisation, l'étape de mesure est apte à mesurer les profils de tout ou partie de la pluralité de raies spectrales du spectre lumineux émis par le plasma. En d'autres termes, l'étape de mesure est configurée pour ne pas mesurer seulement le profil d'une seule raie spectrale d'intérêt.

Selon un mode de réalisation, le procédé de mesure comprend une étape de présélection préalable à l'étape de mesure et apte à présélectionner au moins un profil de raie spectrale correspondant à l'élément d'intérêt.

Selon un mode de réalisation, l'étape de présélection est réalisée en sélectionnant au moins une bande spectrale de mesure correspondant à l'élément d'intérêt.

Selon un mode de réalisation, l'étape de présélection est réalisée en utilisant une base de données de correspondance entre des raies spectrales et des éléments.

Selon un mode de réalisation, l'étape de mesure comprend une étape de centrage du spectromètre sur au moins un profil de raie spectrale présélectionné, par exemple sur au moins une bande spectrale de mesure présélectionnée.

Selon un mode de réalisation, le procédé de mesure comprend une étape de post-sélection réalisée après l'étape de mesure et apte à sélectionner une raie spectrale d'intérêt correspondant à l'élément d'intérêt parmi une pluralité de raies spectrales mesurées.

Selon un mode de réalisation, l'étape de post-sélection est réalisée en utilisant une base de données de correspondance entre des raies spectrales et des éléments.

Selon un mode de réalisation, l'étape de post-sélection est réalisée par visualisation des profils des raies spectrales mesurées et par sélection d'un profil de raie spectrale d'intérêt pour l'élément d'intérêt.

Selon un mode de réalisation, le profil de la raie spectrale d'intérêt présente une forme en double cloche avec un creux d'absorption entre les deux cloches et l'étape de traitement comprend une étape de repérage du point d'équilibre stable dudit profil correspondant au point le plus bas du creux. Cela correspond également au maximum d'auto-absorption.

Selon un mode de réalisation, le profil de la raie spectrale d'intérêt présente une forme de cloche et l'étape de traitement comprend une étape de repérage du point d'équilibre instable dudit profil correspondant au sommet de la cloche. Cela correspond également au maximum d'émission ou au maximum d'auto-absorption.

Selon un mode de réalisation, un délai de mesure est respecté entre l'étape d'application d'un faisceau laser et l'étape de mesure. Ce délai de mesure peut être typiquement de l'ordre de la microseconde, ou du dixième ou d'une dizaine de microsecondes.

Selon un mode de réalisation, l'étape de mesure comprend l'application d'une durée d'exposition du spectromètre à chaque tir laser. Cette durée d'exposition peut être typiquement de l'ordre de la microseconde, ou du dixième ou d'une dizaine de microsecondes.

Selon un mode de réalisation, l'étape de traitement est réalisée par dépouillement du profil de la raie spectrale d'intérêt. Le traitement peut être réalisé de manière à déterminer mathématiquement le point d'équilibre instable ou le point d'équilibre stable et à en déduire la longueur d'onde optimale correspondant audit point d'équilibre.

Selon un mode de réalisation, le procédé de mesure comprend une étape d'élaboration d'une fonction de corrélation entre un rapport isotopique et une longueur d'onde optimale, pour un élément donné. Dans ce cas, l'étape de détermination du rapport isotopique comprend préférentiellement une étape de comparaison de la longueur d'onde optimale relevée avec ladite fonction de corrélation.

Le procédé selon l'invention présente ainsi l'avantage de ne pas nécessiter d'étalonnage en intensité de signal, mais uniquement en longueur d'onde.

Selon un mode de réalisation l'étape de traitement et l'étape de détermination du rapport isotopique sont confondues et comprennent une étape de mise en oeuvre d'une méthode multivariée, par exemple la méthode de régression aux moindres carrés partiels ou par des réseaux de neurones. Cela permet de déterminer directement le rapport isotopique à partir du profil d'au moins une raie spectrale d'intérêt émise par l'élément d'intérêt.

### DESCRIPTION DES FIGURES

D'autres caractéristiques et avantages de l'invention apparaîtront à l'aide de la description qui suit donnée à titre illustratif et non limitatif, faite en regard des figures annexées parmi lesquelles
- la figure 1A et 1B illustrent un exemple de montage LIBS et un exemple de spectre obtenu ;
- les figures 2A et 2B illustrent une raie sélectionnée dans un spectre obtenu pour un mélange de deux isotopes (selon un rapport égal à 1) d'un élément, avec une pression réduite et selon deux concentrations différentes de l'élément dans le plasma
- les figures 3A et 3B illustrent une raie sélectionnée dans un spectre obtenu pour un mélange de deux isotopes (selon un rapport égal à 1) d'un élément, à la pression atmosphérique et selon deux concentrations différentes de l'élément dans le plasma ;
- les figures 4A, 4B et 4C illustrent une raie sélectionnée dans un spectre obtenu à la pression atmosphérique, avec différents rapports isotopiques ;
- la figure 5A montre différents spectres obtenus sur des échantillons de carbonate de lithium de rapport isotopique ⁷Li/⁶Li variable ;
- la figure 5B montre la relation entre la longueur d'onde d'absorption optimale (longueur d'onde du creux d'absorption) et la concentration en ⁶Li déduite des spectres de la figure 5A;
- les figures 6A et 6B montrent un autre mode de réalisation de l'invention ;
- la figure 7 illustre les étapes du procédé selon l'invention.

### EXPOSÉ DÉTAILLÉ DE MODES DE RÉALISATION PARTICULIERS

Les figures 1A et 1B ont été décrites au début de la présente description et ne seront pas reprises ici.

En introduction, on rappelle que les transitions électroniques des atomes vers des niveaux énergétiques supérieurs nécessitent un apport d'énergie. Cette énergie peut être sous forme de photons, dans ce cas il y a absorption des photons par l'atome. Un cas particulier est celui du plasma. Pour simplifier, on peut considérer que le plasma est constitué de deux parties distinctes, le coeur et la périphérie. Des photons émis par le coeur du plasma, plus chaud, peuvent être absorbés par la périphérie, plus froide.

Ce phénomène empêche donc un certain nombre de photons émis de sortir du plasma : c'est le phénomène d'auto-absorption.

Pour un observateur extérieur au plasma, et pour un appareil de mesure, le profil des raies résulte de l'émission et de l'auto-absorption à la même longueur d'onde correspondant aux transitions électroniques entre deux niveaux de tous les atomes considérés placés sur sa ligne de visée. En conséquence, l'intensité mesurée n'est pas seulement la somme de toutes les émissions du plasma, car il faut tenir compte de cette auto-absorption.

Le phénomène d'auto-absorption, bien connu en spectroscopie des plasmas pour l'analyse élémentaire, est plutôt considéré comme un phénomène indésirable car il conduit à une distorsion du profil de la raie, et donc à une non linéarité du signal par rapport à la concentration de l'élément d'intérêt. On peut se référer par exemple au brevet FR2938066 qui concerne la mesure de la composition élémentaire d'un élément.

Il est donc généralement recherché l'annulation ou du moins la minimisation voire le contournement de ce phénomène, comme il est recherché la minimisation ou le détournement de l'effet Stark (voir l'introduction de la présente demande) afin d'améliorer le pouvoir de résolution du système de mesure, et non son utilisation en tant que signal à exploiter.

Les inventeurs ont au contraire pensé à exploiter le phénomène d'auto-absorption pour en déduire des informations sur les isotopes d'un élément donné dans un matériau.

Les figures 2A et 2B montrent une raie 21 d'un élément d'intérêt. Elles montrent la raie 21 obtenue dans deux cas de figures, en fonction de la concentration de l'élément dans le matériau.

La raie 21 a été sélectionnée parmi un spectre 20 obtenu par un procédé LIBS de l'état de la technique dans lequel on fait l'analyse à pression réduite, voire sous vide. En limitant ainsi le confinement du plasma par le milieu ambiant, on diminue sa densité, minimisant ainsi l'élargissement des raies par effet Stark, et l'on peut retrouver une sélectivité spectrale suffisante entre deux isotopes Iso₁ et Iso₂. On obtient et on peut visualiser en effet une double raie :
- L'intensité Iₘₐₓ₁ d'une raie permet de déterminer la longueur d'onde λₘₐₓ₁ qui correspond à l'isotope 1 (Iso₁).
- L'intensité Iₘₐₓ₂ de l'autre raie permet de déterminer la longueur d'onde λₘₐₓ₂ qui correspond à l'isotope 2 (Iso₂).

On peut en déduire le rapport isotopique Iso₁/ Iso₂ en faisant le ratio Iₘₐₓ₁/ Iₘₐₓ₂.

Mais cette méthode est possible pour certains isotopes seulement. En outre, cela se fait au détriment d'une facilité de mise en oeuvre expérimentale, du fait de la nécessité de travailler à pression réduite voire sous vide, et avec un spectromètre de haut pouvoir de résolution.

Les figures 3A et 3B montrent une raie 21 d'un élément d'intérêt. La raie 21 a été sélectionnée parmi un spectre 20 obtenu par un procédé selon l'invention qui ne nécessite pas d'appliquer une pression réduite. Les figures montrent la raie 21 obtenue dans deux cas de figures, en fonction de la concentration de l'élément dans le matériau.

La figure 3A illustre le cas où l'élément est en forte concentration dans le plasma, le phénomène d'auto-absorption est alors marqué. On observe un profil de raie creusé en son centre, résultant de la superposition d'un profil d'émission spectralement large, avec un profil d'absorption, spectralement plus étroit.

On mesure dans ce cas la valeur de la longueur d'onde optimale λ_{1,2} correspondant au creux d'absorption. Ladite longueur d'onde optimale est dans ce cas mesurée sur la partie du profil correspondant à l'absorption (soit λ_{1,2 abs}) c'est-à-dire au point minimum du creux observé (point d'équilibre stable Pₛₜ). Elle est corrélée au rapport entre deux isotopes Iso₁ et Iso₂ de l'élément considéré, et elle est décalée en fonction dudit rapport isotopique.

La figure 3B illustre le cas où la concentration de l'élément dans le plasma est moindre, le phénomène d'auto-absorption est alors moins marqué voire absent. On obtient un profil de raie spectralement large, non creusé en son centre.

On mesure dans ce cas la valeur de la longueur d'onde optimale λ_{1,2} correspondant au pic d'émission. Ladite longueur d'onde optimale est dans ce cas mesurée sur la partie du profil correspondant à l'émission (soit λ_{1,2 em}) c'est-à-dire au point maximum de la courbe observée (point d'équilibre instable Pᵢₙₛₜ). Elle est corrélée au rapport entre deux isotopes Iso₁ et Iso₂ de l'élément considéré, et elle est décalée en fonction dudit rapport isotopique.

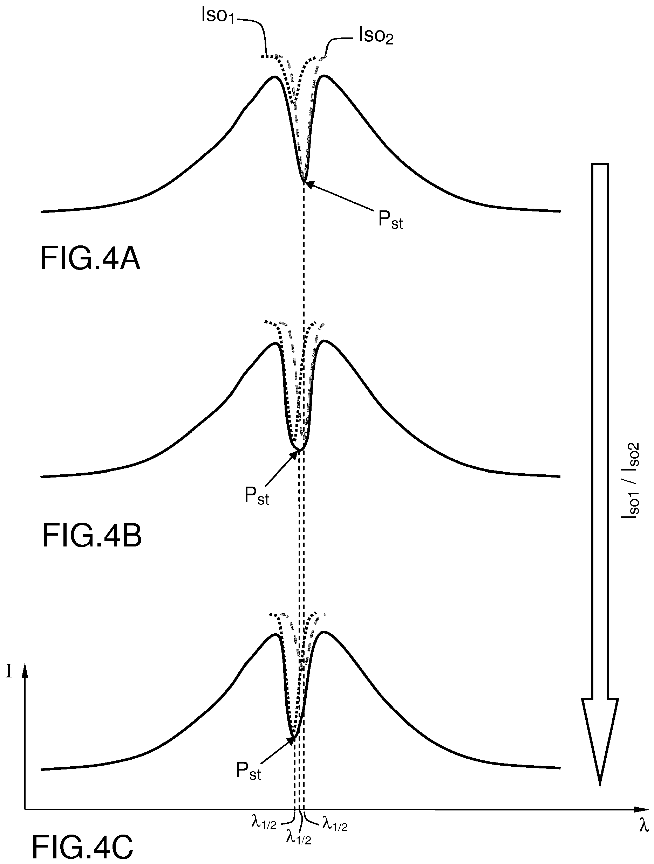

Les figures 4A, 4B et 4C illustrent une raie 21 sélectionnée dans le spectre obtenu à la pression atmosphérique en fonction de différents rapports isotopiques. Dans ces figures sont représentés les isotopes Iso₁ et Iso₂ et elles illustrent un cas où la concentration de l'élément est en forte concentration dans le plasma, et où on observe un profil de raie creusé en son centre. On mesure la valeur de la longueur d'onde optimale λ_{1,2} correspondant au creux d'absorption (point d'équilibre stable Pₛₜ). La longueur d'onde optimale est dans ce cas mesurée sur la partie du profil correspondant à l'absorption (λ_{1,2 abs}).

On observe que ladite longueur d'onde optimale λ_{1,2} est corrélée au rapport entre deux isotopes Iso₁ et Iso₂ de l'élément considéré, et qu'elle est décalée en fonction dudit rapport isotopique.

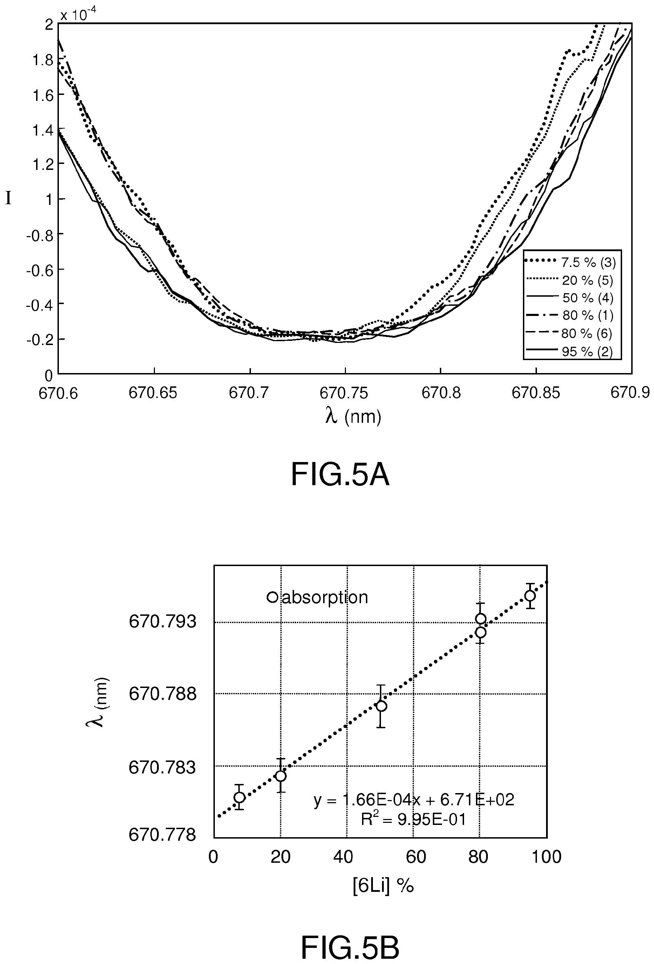

En figure 5A, sont donnés quelques résultats expérimentaux qui montrent différents profils de raies déterminées parmi différents spectres obtenus sur des échantillons de carbonate de lithium de rapport isotopique ⁷Li/⁶Li variable. Les résultats expérimentaux sont corrigés du fond électronique de la caméra et normalisés par rapport à l'aire intégrée du spectre. Les pourcentages indiquent la teneur relative en ⁶Li (le complément étant la teneur en ⁷Li) et les numéros entre parenthèses indiquent l'ordre de passage des échantillons.

Les mesures ont été réalisées sur plusieurs échantillons de carbonate de lithium (Li₂CO₃) de rapports isotopiques ⁷Li/⁶Li variables. L'Iso₁ est le ⁷Li et l'Iso₂ est le ⁶Li.

Pour cet élément, l'abondance isotopique naturelle est de 7.5 % pour ⁶Li et 93.5 % pour ⁷Li. Les échantillons ont été préparés sous forme de pastilles à partir de mélanges variables de deux poudres commerciales, l'une de Li₂CO₃ naturel et l'autre de Li₂CO₃ enrichie à 95 % en ⁶Li (Sigma-Aldrich). Les différentes fractions de ⁶Li dans les pastilles ont été fixées à 7.5 %, 20 %, 50 %, 80 % et 95 %, soit des rapports isotopiques ⁷Li/⁶Li respectivement de 12.3, 4, 1, 0.25 et 0.053. L'ordre dans lequel les échantillons ont été mesurés a été tiré aléatoirement.

Plusieurs tirs laser ont été réalisés sur chaque échantillon, de manière à générer un plasma. Ainsi, pour chaque échantillon, 25 spectres ont été enregistrés, chacun d'entre eux résultant de 20 tirs laser accumulés au même point dudit échantillon.

Il est préférable de réaliser plusieurs tirs laser afin d'améliorer le rapport signal sur bruit. Ceci est d'autant plus intéressant lorsqu'on souhaite repérer le décalage entre deux isotopes qui est très faible, comme indiqué précédemment. Avec un laser de 20Hz, il suffit d'une seconde pour réaliser 20 tirs. Cela n'augmente pas la durée du procédé de mesure isotopique.

Le délai entre l'étape d'application du faisceau laser et l'étape de mesure par spectrométrie, autrement dit le délai entre un tir laser et la mesure, était de 1.75 µs pour chaque tir laser.

La durée d'exposition du spectromètre (de son détecteur) à chaque tir laser (ou porte temporelle d'intégration du signal) était de 0.500 µs.

Entre chaque échantillon, une lampe à cathode creuse au lithium a été mesurée afin de vérifier l'absence de dérive en température du spectromètre.

Les spectres ont été enregistrés avec un système LIBS commercial (Mobilibs, Ivea) associé à un spectromètre de 1 m de focale (THR1000, Jobin-Yvon) équipé d'une caméra intensifiée (iStar, Andor) et centré à 670.775 nm, la longueur d'onde de la raie la plus intense du ⁷Li. Le laser avait une longueur d'onde de 266 nm et l'énergie de l'impulsion a été ajustée à 5.1 mJ.

Deux raies spectrales principales sont connues pour le lithium et ont été identifiées sur les différents spectres obtenus :
- pour le ⁷Li, la longueur d'onde maximale λₘₐₓ de la première raie est de 670.775 nm et la longueur d'onde maximale λₘₐₓ de la seconde raie est de 670.790 nm ;
- pour le ⁶Li, chaque raie est décalée vers le rouge d'environ 17 pm. On obtient donc deux raies à 670.792 nm et 670.807 nm.

La figure 5A montre les spectres obtenus, et en particulier les différents profils de la raie obtenus pour les différents mélanges de ⁷Li et ⁶Li. Le creux de la forme en double cloche creusée au milieu de la raie est bien visible, elle correspond au profil d'auto-absorption. Dans ce cas, on détermine le point d'équilibre stable, correspondant au point le plus bas du creux, et on mesure la valeur de la longueur d'onde optimale λ_{1,2} correspondant au creux du profil d'auto-absorption.

La longueur d'onde optimale λ_{1,2} a été déterminée expérimentalement en ajustant le creux d'absorption par un profil Lorentzien.

La figure 5B montre une courbe obtenue, donnant la longueur d'onde d'absorption optimale en fonction de la concentration en ⁶Li de l'échantillon. Les barres d'erreur représentent ±2σ sur la moyenne des 25 répliques (soit ±2σ₀/√25 avec σ₀ l'écart-type sur les 25 répliques).

On observe une très bonne linéarité, montrant que l'on peut donc quantifier le rapport isotopique par cette méthode, et sans avoir recours à un étalonnage en intensité de signal. La mesure de la longueur d'onde optimale λ_{1,2} suffit.

Dans l'exemple, présenté, la longueur d'onde optimale λ_{1,2} est mesurée sur la partie du profil correspondant à l'absorption (λ_{1,2 abs}).

Le pouvoir de résolution λ/Δλ du spectromètre utilisé a été déterminé à 37200 à partir de la lampe à cathode creuse (λ = 670 nm et Δλ = 18 pm, largeur totale à mi-hauteur). Cette résolution est suffisante pour déterminer le rapport isotopique entre les deux isotopes ⁷Li et ⁶Li.

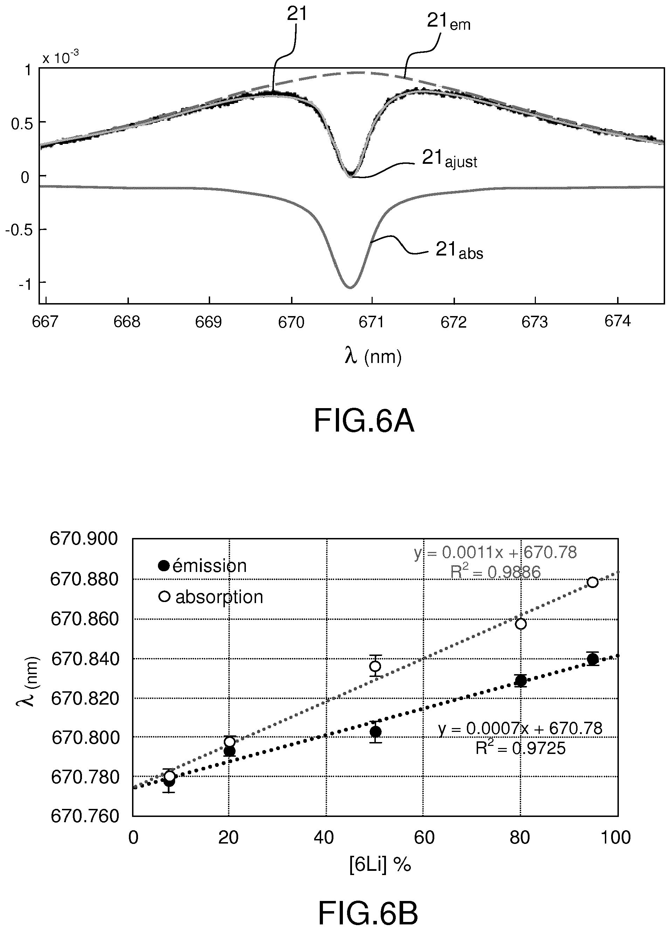

Les figures 6A et 6B montrent un autre mode de réalisation du procédé.

Au lieu de considérer la raie spectrale mesurée qui est la somme d'une raie d'absorption et d'une raie d'émission, le présent mode consiste à retrouver chacune des raies d'absorption et d'émission (autrement dit chacune des contributions en absorption et en émission de la raie spectrale mesurée).

Ainsi, si on se réfère à la figure 6A, la courbe 21 correspond à une raie spectrale d'intérêt mesurée. On retrouve une courbe en absorption 21_{abs} qui correspond à un ajustement réalisé en absorption de la courbe 21. Et on construit une courbe en émission 21ₑₘ virtuelle qui correspond à un ajustement réalisé en émission de la courbe 21.

La courbe ajustée 21ₐⱼᵤₛₜ correspond à un ajustement final qui est la somme des deux courbes en absorption 21_{abs} et en émission 21ₑₘ. Elle doit correspondre, aux erreurs de mesure et/ou d'ajustement près, à la courbe mesurée 21.

La longueur d'onde de la contribution en absorption (point d'équilibre stable) se décale avec le rapport isotopique.

Et la longueur d'onde de la contribution en émission (point d'équilibre instable, mais virtuel) se décale également avec le rapport isotopique.

On peut donc exploiter l'une ou l'autre de ces courbes en absorption et en émission (ou les deux) pour déterminer le rapport isotopique d'un élément d'intérêt.

La figure 6B illustre les résultats de ce mode de réalisation pour le ⁶Li et donne la longueur d'onde d'absorption optimale en fonction de la concentration en ⁶Li par rapport au ⁷Li de l'échantillon.

On observe également une bonne linéarité, montrant que l'on peut donc quantifier le rapport isotopique par ce mode de réalisation. La mesure de la longueur d'onde optimale λ_{1,2} suffit et elle peut être mesurée soit sur un profil en absorption, soit sur un profil en émission.

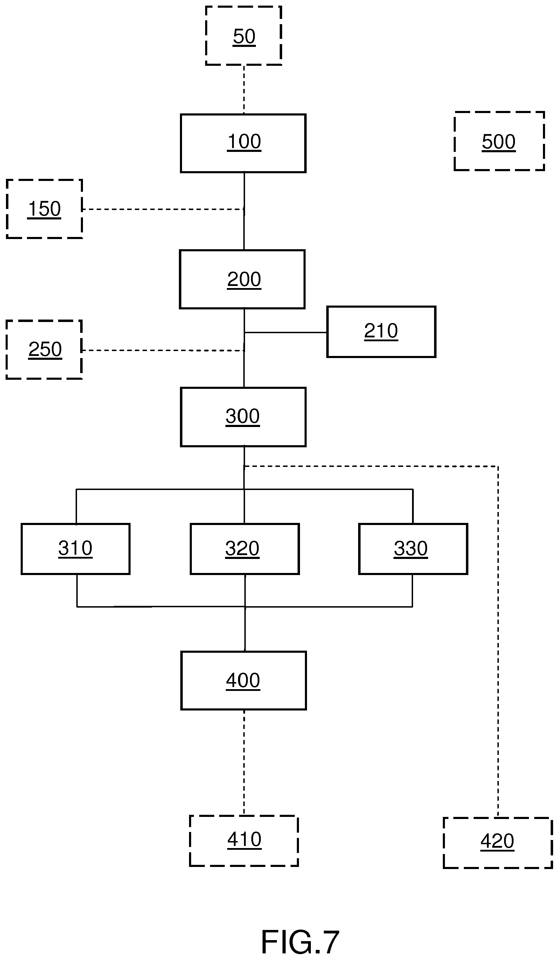

La figure 7 illustre les étapes du procédé selon l'invention. Le procédé de mesure comprend les étapes suivantes :
- une étape d'application 100 d'au moins un faisceau laser sur le matériau à analyser de manière à générer un plasma, ledit plasma étant apte à émettre un spectre lumineux comprenant une pluralité de raies spectrales émises par les éléments du matériau ;
- une étape de mesure 200 consécutive à l'étape d'application 100 et apte à mesurer le profil d'au moins une raie spectrale d'intérêt émise par l'élément d'intérêt, ladite étape de mesure comprenant au moins une étape d'analyse 210 par un spectromètre du spectre lumineux émis par le plasma ;
- une étape de traitement 300 consécutive à l'étape de mesure 200 et apte à relever sur le profil mesuré de la raie spectrale d'intérêt la longueur d'onde optimale correspondant à un point d'équilibre dudit profil. Il peut s'agir :
   - soit au point d'équilibre stable dudit profil lorsque le profil de la raie spectrale présente une forme en double cloche (sous étape 310) ;
   - soit au point d'équilibre instable dudit profil lorsque le profil de la raie spectrale présente une forme en cloche (sous étape 320) ;
- une étape de détermination 400 consécutive à l'étape de traitement 300 et apte à déterminer le rapport isotopique en fonction de la longueur d'onde optimale relevée.

En outre, le procédé de mesure peut comprendre une étape d'émission 50 d'un faisceau laser par des moyens d'émission, tels qu'un générateur laser, préalable à l'étape d'application 100. L'émission dudit faisceau laser est préférentiellement réalisée par impulsions.

Le procédé peut comprendre une étape de présélection 150 préalable à l'étape de mesure 200 et apte à présélectionner au moins un profil de raie spectrale type correspondant à l'élément d'intérêt.

Le procédé peut comprendre une étape de post-sélection 250 réalisée après l'étape de mesure 200 et apte à sélectionner une raie spectrale d'intérêt correspondant à l'élément d'intérêt parmi une pluralité de raies spectrales mesurées.

Le procédé peut comprendre une étape d'élaboration 500 d'une fonction de corrélation entre un rapport isotopique et une longueur d'onde optimale, pour un élément donné. Cette étape peut être réalisée préférentiellement avant l'étape d'application 100.

Dans ce cas, l'étape de détermination 400 du rapport isotopique peut comprendre une étape de comparaison 410 de la longueur d'onde optimale relevée avec ladite fonction de corrélation.

Alternativement, l'étape de détermination 400 du rapport isotopique peut comprendre une étape de mise en oeuvre 420 d'une méthode multivariée, par exemple la méthode de régression aux moindres carrés partiels ou par des réseaux de neurones. Dans ce cas, l'étape de traitement 300 et l'étape de détermination 400 du rapport isotopique peuvent être confondues, comme indiqué sur la figure 7.

Le procédé selon l'invention permet de mesurer un rapport entre deux isotopes d'un élément.

Pour mettre en oeuvre le procédé selon l'invention, un dispositif LIBS connu tel que présenté en figure 1A peut être utilisé à pression atmosphérique.

Il peut être encore plus simple car il suffit de disposer d'un seul générateur laser apte à générer au moins un faisceau laser, d'un système optique, par exemple une lentille, et d'un spectromètre.

Le générateur laser délivrera de préférence des faisceaux laser par impulsions.

C'est donc un avantage du procédé selon l'invention de pouvoir utiliser un dispositif LIBS dont les intérêts sont connus :
- il est rapide, un spectre s'obtenant en quelques microsecondes par tir laser ;
- l'échantillon ou le matériau peut être solide, liquide ou gazeux ;
- il n'est pas nécessaire de préparer l'échantillon ;
- il peut être compact : il existe des lasers et des spectromètres suffisamment petits de manière à disposer d'un dispositif LIBS portable et autonome ;
- il est possible d'effectuer des mesures à distance jusqu'à plusieurs dizaines de mètres en jouant sur l'optique de focalisation du laser ;
- le coût est relativement réduit, surtout comparé à celui des instruments de mesure isotopique standard par spectrométrie de masse tels que les ICP-MS.

Ainsi, le procédé selon l'invention peut être mis en oeuvre sur le terrain, et sans préparation particulière d'un échantillon. Il n'est donc pas nécessaire dans certains cas de déplacer le matériau, ce qui peut être un énorme avantage lorsque les matériaux sont radioactifs et/ou contaminants (gain de temps, minimisation des risques ...).

Un autre avantage du procédé selon l'invention est de permettre l'analyse isotopique en ligne, rapide, par exemple pour le contrôle de production industrielle de matière nucléaire.

Le matériau peut être sous forme solide, liquide, gazeuse, voire sous forme d'aérosol.

Le procédé selon l'invention permet d'éviter l'utilisation de spectromètres à haut pouvoir de résolution.

La présente invention n'est pas limitée aux modes de réalisation ou aux exemples précédemment décrits mais s'étend à tout mode de réalisation entrant dans la portée des revendications.

La présente invention peut s'appliquer à :
- l'inspection de sites nucléaires (par le personnel de l'AIEA par exemple) pour la lutte contre la prolifération nucléaire ou pour la mise en oeuvre des garanties ;
- l'analyse isotopique en ligne dans une installation de production ou d'enrichissement de matière nucléaire ;
- la caractérisation de débris de combustible lors d'accidents ;
- la médecine légale nucléaire ;
- autres domaines d'application non nucléaires : archéologie, géologie, paléoclimatologie, sécurité nationale ...

## Revendications

1. Procédé de mesure d'un rapport isotopique d'un élément d'intérêt présent dans un matériau comportant une pluralité d'éléments, ledit procédé de mesure comprenant les étapes suivantes :
- une étape d'application (100) d'au moins un faisceau laser (3) sur le matériau de manière à générer un plasma (5), ledit plasma étant apte à émettre un spectre lumineux (11) comprenant une pluralité de raies spectrales émises par les éléments du matériau ;
- une étape de mesure (200) consécutive à l'étape d'application (100) et apte à mesurer le profil d'au moins une raie spectrale d'intérêt (21) émise par l'élément d'intérêt, ladite étape de mesure comprenant au moins une analyse par un spectromètre (8) du spectre lumineux (11) émis par le plasma (5) ;
**caractérisé en ce que** le procédé comprend en outre :
- une étape de traitement (300) consécutive à l'étape de mesure (200) et apte à repérer, en fonction du profil mesuré de la raie spectrale d'intérêt (21), la longueur d'onde optimale (λ_{1,2}) correspondant soit au point d'équilibre stable (Pₛₜ) correspondant au creux entre deux cloches lorsque le profil présente un profil d'auto-absorption en double cloche, soit au point d'équilibre instable (Pᵢₙₛₜ) correspondant au sommet du profil en cloche lorsque le profil est une simple cloche ;
- une étape de détermination (400) consécutive à l'étape de traitement (300) et apte à déterminer le rapport isotopique (Iso₁/Iso₂) en fonction de la longueur d'onde optimale (λ_{1,2}) relevée, ladite étape de détermination comprenant soit une étape de comparaison (410) avec une fonction de corrélation entre un rapport isotopique (Iso₁/Iso₂) et une longueur d'onde optimale (λ_{1,2}) pour un élément donné, soit une étape de mise en oeuvre (420) d'une méthode multivariée.

2. Procédé de mesure selon la revendication 1, le procédé de mesure comprenant une étape d'émission (50) d'un faisceau laser par des moyens d'émission, tels qu'un générateur laser, préalable à l'étape d'application (100), l'émission dudit faisceau laser étant réalisée par impulsions.

3. Procédé de mesure selon l'une des revendications 1 ou 2, l'étape de mesure (200) étant apte à mesurer les profils de tout ou partie de la pluralité de raies spectrales du spectre lumineux (11) émis par le plasma (5).

4. Procédé de mesure selon l'une des revendications 1 à 3, comprenant une étape de présélection (150) préalable à l'étape de mesure (200) et apte à présélectionner au moins un profil de raie spectrale correspondant à l'élément d'intérêt.

5. Procédé de mesure selon la revendication 4, l'étape de présélection (150) étant réalisée en sélectionnant au moins une bande spectrale de mesure correspondant à l'élément d'intérêt.

6. Procédé de mesure selon l'une des revendications 4 ou 5, l'étape de présélection (150) étant réalisée en utilisant une base de données de correspondance entre des raies spectrales et des éléments.

7. Procédé de mesure selon l'une des revendications 4 à 6, l'étape de mesure (200) comprenant une étape de centrage du spectromètre sur le au moins un profil de raie spectrale présélectionné, par exemple sur la au moins une bande spectrale de mesure présélectionnée.

8. Procédé de mesure selon l'une des revendications précédentes, comprenant une étape de post-sélection (250) réalisée après l'étape de mesure (200) et apte à sélectionner une raie spectrale d'intérêt (21) correspondant à l'élément d'intérêt parmi une pluralité de raies spectrales mesurées.

9. Procédé de mesure selon la revendication 8, l'étape de post-sélection (250) étant réalisée en utilisant une base de données de correspondance entre des raies spectrales et des éléments.

10. Procédé de mesure selon la revendication 8, l'étape de post-sélection (250) étant réalisée par visualisation des profils des raies spectrales mesurées et par sélection d'un profil de raie spectrale d'intérêt (21) pour l'élément d'intérêt.

11. Procédé de mesure selon l'une des revendications 1 à 10, le profil de la raie spectrale d'intérêt (21) présentant une forme en double cloche avec un creux d'absorption entre les deux cloches, l'étape de traitement (300) comprenant une étape de repérage (310) du point d'équilibre stable (Pₛₜ) dudit profil correspondant au point le plus bas du creux.

12. Procédé de mesure selon l'une des revendications 1 à 10, le profil de la raie spectrale d'intérêt (21) présentant une forme de cloche, l'étape de traitement (300) comprenant une étape de repérage (320) du point d'équilibre instable (Pᵢₙₛₜ) dudit profil correspondant au sommet de la cloche.

13. Procédé de mesure selon l'une des revendications précédentes, un délai de mesure étant respecté entre l'étape d'application (100) d'un faisceau laser (3) et l'étape de mesure (200).

14. Procédé de mesure selon l'une des revendications précédentes, l'étape de mesure (200) comprenant l'application d'une durée d'exposition du spectromètre pour chaque faisceau laser.

15. Procédé de mesure selon l'une des revendications précédentes, l'étape de traitement (300) étant réalisée par dépouillement du profil de la raie spectrale d'intérêt.

16. Procédé de mesure selon l'une des revendications précédentes comprenant une étape d'élaboration (500) d'une fonction de corrélation entre un rapport isotopique (Iso₁/Iso₂) et une longueur d'onde optimale (λ_{ι,2}), pour un élément donné, l'étape de détermination (400) du rapport isotopique (Iso₁/Iso₂) comprenant une étape de comparaison (410) de la longueur d'onde optimale relevée avec ladite fonction de corrélation.

17. Procédé de mesure selon l'une des revendications 1 à 15, l'étape de traitement (300) et l'étape de détermination (400) du rapport isotopique étant confondues et comprenant une étape de mise en oeuvre (420) d'une méthode multivariée, par exemple la méthode de régression aux moindres carrés partiels ou par des réseaux de neurones.
